# EUROPÄISCHE PATENTSCHRIFT

(11) **EP 0 720 591 B1**
(45) Veröffentlichungstag und Bekanntmachung des Hinweises auf die Patenterteilung: **20.10.1999**
(21) Anmeldenummer: 95909736.1
(22) Anmeldetag: 18.02.1995
(51) Int. Cl.: C03B 7/086

(54) **VORRICHTUNG ZUM ANTRIEB VON PLUNGERN IN EINEM SPEISER EINER GLASFORMMASCHINE**
DRIVE FOR THE PLUNGERS IN THE FEED TO A GLASS-MOULDING MACHINE
DISPOSITIF PERMETTANT D'ENTRAINER DES PLONGEURS DANS UN DISTRIBUTEUR DE MACHINE A FORMER LE VERRE

(30) Priorität: 23.06.1994 DE 9410301 U
(43) Veröffentlichungstag der Anmeldung: 10.07.1996
(73) Patentinhaber: FIRMA HERMANN HEYE, D-31682 Obernkirchen (DE)
(72) Erfinder: BÖGERT, Hermann, D-31749 Auetal (DE); GEISEL, Gerhard, D-31675 Bückeburg (DE); HERMENING, Heinz, D-32457 Porta Westfalica (DE)
(74) Vertreter: Kosel, Peter, Dipl.-Ing.
(86) Internationale Anmeldenummer: EP9500588
(87) Internationale Veröffentlichungsnummer: WO9600192

(56) Entgegenhaltungen:
- DE-A- 4 239 725
- DE-U- 9 410 301

## Beschreibung

Die Erfindung betrifft eine Vorrichtung nach dem Oberbegriff des Anspruchs 1.

Bei einer bekannten Vorrichtung dieser Art (DE 42 31 455 A1) ist die Abtriebswelle über eine Kupplung mit einer koaxialen Gewindespindel verbunden, die in Gewindeverbindung mit dem drehfest und längsverschiebbar an dem Kipphebel gehaltenen Anschlußglied steht. Der Servoantrieb ist insgesamt heb- und senkbar an einer waagerechten, vorrichtungsfesten Achse gelagert. In jedem Betriebszyklus treibt der Servoantrieb die Gewindespindel reversierend hin und her. Dies hat besonderen Steuerungsaufwand und gesteigerten Verschleiß im Antriebssystem zur Folge.

Aus der DE 42 39 725 A1 ist es an sich bekannt, bei einer Vorrichtung nach der vorerwähnten DE 42 31 455 A1 das Anschlußglied als Spannglied mit einem Stellantrieb auszubilden, das an dem Kipphebel (Kurbelschwinge) verspannbar ist. Außerdem geschieht hier die Längsverschiebung des Spannglieds entlang dem Kipphebel nicht mehr durch eine Handkurbel, sondern motorisch durch eine Stelleinrichtung mit einem Stellantrieb.

Aus der DE-Patentschrift 514 112, der US 1 596 438 A und der JP 1-234 335 A (Patent Abstracts of Japan, C-665, December 13, 1989, Vol.13/No.562) ist jeweils im wesentlichen eine Vorrichtung an sich bekannt, wie sie in der vorerwähnten DE 42 31 455 A1 in Spalte 1, Zeile 12 bis 36, zum Stand der Technik beschrieben ist.

Der Erfindung liegt die Aufgabe zugrunde, das Antriebssystem zu verbessern.

Diese Aufgabe ist durch die Merkmale des Anspruchs 1 gelöst. Der elektrische Servoantrieb kann einen elektrischen Servomotor oder einen elektrischen Servomotor und ein nachgeschaltetes Getriebe aufweisen. Das Antriebssystem ist vergleichsweise einfach und funktionssicher aufgebaut. Bestehende Tropfenspeiser für Glasformmaschinen lassen sich mit minimalem Aufwand auf das erfindungsgemäße Antriebssystem umrüsten.

Die Merkmale des Anspruchs 2 führen zu einer raumsparenden Anordnung. Das Getriebe kann z.B. als Schneckengetriebe ausgebildet sein.

Die Merkmale des Anspruchs 3 bringen den besonderen Vorteil, daß das beim Stand der Technik erforderliche zweimalige Reversieren des Servomotors je Betriebszyklus entfällt.

Gemäß Anspruch 4 läßt sich auf besonders einfache Weise die Synchronisation des Speiserbetriebs aufrechterhalten.

Durch die Merkmale des Anspruchs 5 ergeben sich konstruktive Vorteile.

Gemäß Anspruch 6 läßt sich eine besonders einfache und funktionssichere Hubverstellung für die Plunger erreichen.

Mit den Merkmalen des Anspruchs 7 ergibt sich eine besonders sichere Abstützung des Gleitelements an dem Anschlußglied. Das Gleitelement weist vorzugsweise eine waagerechte Achse auf.

Gemäß Anspruch 8 wird das Gleitelement kraftschlüssig in Anlage an der wenigstens einen Gleitbahn gehalten. Gleichzeitig ist dadurch eine Elastizität für den Fall eingebaut, daß sich an irgendeiner Stelle des Antriebssystems Widerstände einstellen.

Mit den Merkmalen des Anspruchs 9 ist diese Elastizität auf besonders einfache und wirksame Weise zu erzielen. Zum Beispiel kann die Feder als am Boden der Zugstange abgestützte Druckfeder ausgebildet sein.

Die Merkmale des Anspruchs 10 dienen der Justage des Antriebssystems.

Merkmale und Vorteile der Erfindung werden nachfolgend anhand der in den Zeichnungen dargestellten Ausführungsbeispiele erläutert. Es zeigt:
Fig. 1 eine Seitenansicht eines Plungermechanismus,
Fig. 2 eine Seitenansicht eines Teils des Antriebssystems gemäß Fig. 1 in vergrößerter Darstellung, teilweise im Längsschnitt, und
Fig. 3 im wesentlichen die Schnittansicht nach Linie III-III in Fig. 2 in wiederum vergrößerter Darstellung.

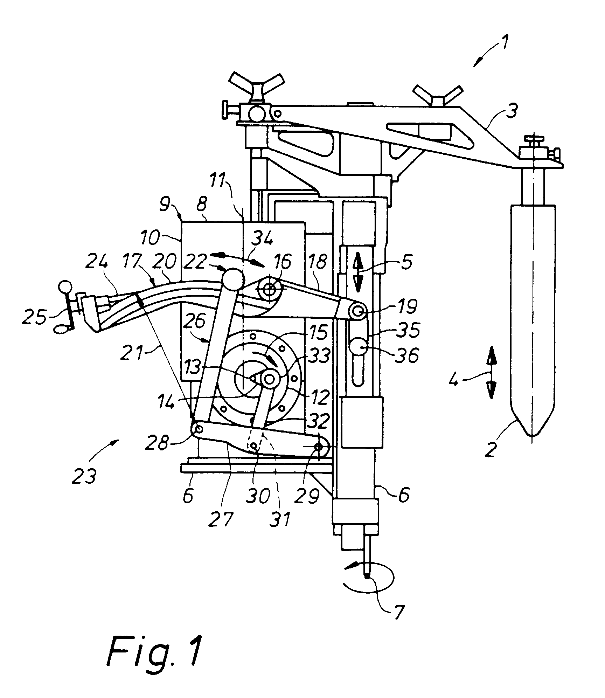

Fig. 1 zeigt einen Plungermechanismus 1, bei dem wenigstens ein Plunger 2 an einem Plungerhalter 3 aufgehängt und in den senkrechten Richtungen eines Doppelpfeils 4 bewegbar ist. Jeder Plunger 2 taucht in einen nicht gezeichneten, an sich bekannten Speiserkopf eines Speisers für eine Glasformmaschine 1 und beeinflußt das Ausfließen des schmelzflüssigen Glases aus dem Speiserkopf und die Bildung von Glastropfen für die nachgeschaltete Glasformmaschine. Da diese Vorgänge an sich bekannt sind, kann auf eine Einzeldarstellung im Rahmen der vorliegenden Anmeldung verzichtet werden.

Der Plungerhalter 3 ist in den senkrechten Richtungen eines Doppelpfeils 5 an einem stationären Rahmen 6 des Plungermechanismus 1 verschiebbar gelagert. Bei 7 erfolgt eine Basiseinstellung der Höhe des wenigstens einen Plungers 2.

An dem Rahmen 6 ist ein Gehäuse 8 eines elektrischen Servoantriebs 9 montiert. Der Servoantrieb 9 weist einen elektrischen Servomotor 10 mit senkrechter Längsachse 11 und ein nachgeschaltetes Getriebe 12 mit waagerechter Abtriebswelle 13 auf.

An der Abtriebswelle 13 ist eine Kurbel 14 befestigt, die stets in derselben Drehrichtung 15 drehbar ist und in jedem Betriebszyklus nur in ihrem unteren Totpunkt zur Synchronisation des Speiserbetriebs anhaltbar ist.

Das Gehäuse 8 trägt eine waagerechte Lagerachse 16, an der ein Kipphebel 17 heb- und senkbar gelagert ist. An dem einen Arm 18 des Kipphebels 17 ist in einem Anlenkpunkt 19 der Plungerhalter 3 angelenkt. Der andere Arm 20 des Kipphebels 17 ist kreisbogenförmig mit einem Radius 21 ausgebildet. Längs des anderen Arms 20 ist ein Anschlußglied 22 eines Antriebssystems 23 zur Änderung des Hubes des wenigstens einen Plungers 2 einstellbar. Die Einstellung geschieht durch eine Gewindespindel 24, die durch eine Handkurbel 25 drehbar ist und in Gewindeeingriff mit dem Anschlußglied 22 steht. Die Gewindespindel 24 ist vor Längsbewegung gegenüber dem anderen Arm 20 gesichert.

Das Anschlußglied 22 ist an einer Zugstange 26 befestigt, die an einem freien Ende eines Schwinghebels 27 in einem Anlenkpunkt 28 angelenkt ist. Der Radius 21 geht von diesem Anlenkpunkt 28 aus. Der Schwinghebel 27 ist an einem vorrichtungsfesten Lagerpunkt 29 heb- und senkbar gelagert. Zwischen dem Lagerpunkt 29 und dem Anlenkpunkt 28 ist in einem Anlenkpunkt 30 ein erstes Ende 31 einer Schubstange 32 angelenkt. Ein zweites Ende 33 der Schubstange 32 ist in radialem Abstand von der Längsachse der Abtriebswelle 13 an der Kurbel 14 angelenkt.

Eine Drehung der Kurbel 14 in der Drehrichtung 15 gemäß Fig. 1 hat zur Folge, daß die Schubstange 32 nach unten geschoben wird und den Schwinghebel 27 im Gegenuhrzeigersinn senkt. Dadurch wird die Zugstange 26 nach unten gezogen und schwenkt den Kipphebel 17 im Gegenuhrzeigersinn, wodurch der Plungerhalter 3 und damit der wenigstens eine Plunger 2 zwangsläufig angehoben werden.

Soll der Hub der Plungerbewegung geändert werden, wird die Handkurbel 25 entsprechend gedreht und das Anschlußglied 22 in den Richtungen des Doppelpfeils 34 in die gewünschte neue Position entlang dem anderen Arm 20 des Kipphebels 17 eingestellt.

Vorzugsweise ist der Anlenkpunkt 19 nicht unmittelbar, sondern unter Zwischenschaltung einer Lasche 35 an einem Anlenkpunkt 36 des Plungerhalters 3 angelenkt. Auf diese Weise läßt sich besonders einfach die Bewegung des Anlenkpunkts 19 auf einem Kreisbogen um die Lagerachse 16 kompensieren.

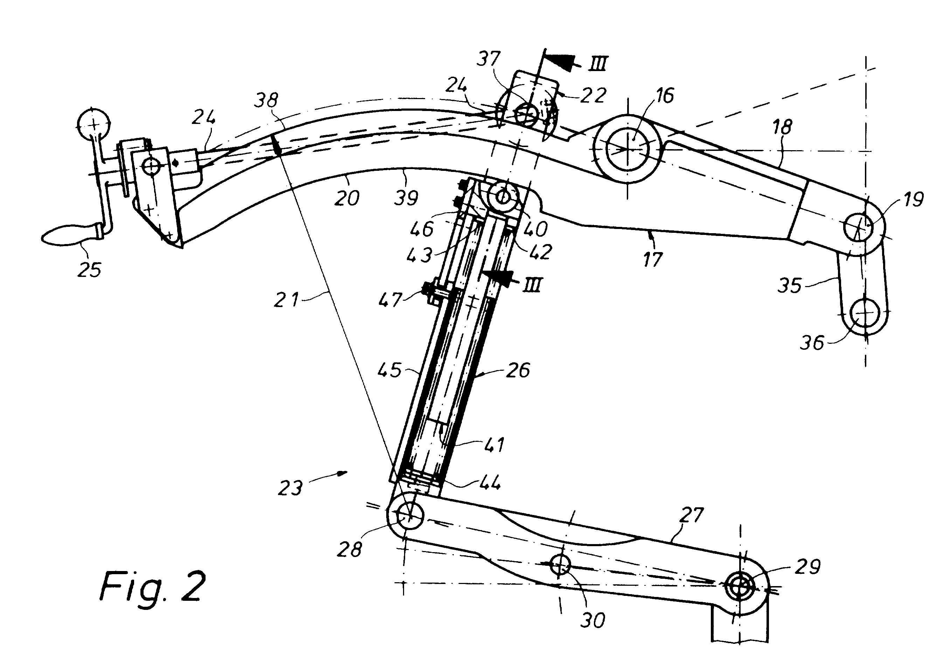

In Fig. 2 ist ein kreisförmiges Gleitelement 37 des Anschlußglieds 22 zu erkennen. Das Gleitelement 37 ist auf einer in diesem Fall kreisbogenförmigen Gleitbahn 38 des Kipphebels 17 durch die Gewindespindel 24 einstellbar verschiebbar.

An seiner der Gleitbahn 38 gegenüberliegenden, unteren Seite ist der Kipphebel 17 mit einer Hilfsbahn 39 versehen. An die Hilfsbahn 39 ist ein relativ zu dem Rest der Zugstange 26 in axialer Richtung bewegbares Drückelement 40 der Zugstange 26 angedrückt. Das Drückelement 40 ist in diesem Fall als Rolle ausgebildet, die an einem sich nach unten in die Zugstange 26 erstreckenden Schaft 41 frei drehbar ist. An einem Außenflansch 42 des Schaftes 41 stützt sich an der Unterseite eine Druckfeder 43 ab, deren unteres Ende auf dem Boden 44 eines unteren Teils 45 der Zugstange 26 ruht.

Ein oberer Teil 46 der Zugstange 26 ist in axialer Richtung relativ zu dem unteren Teil 45 durch eine Einstellvorrichtung 47 einstellbar. Dadurch läßt sich die wirksame axiale Länge der Schubstange 26 beeinflussen.

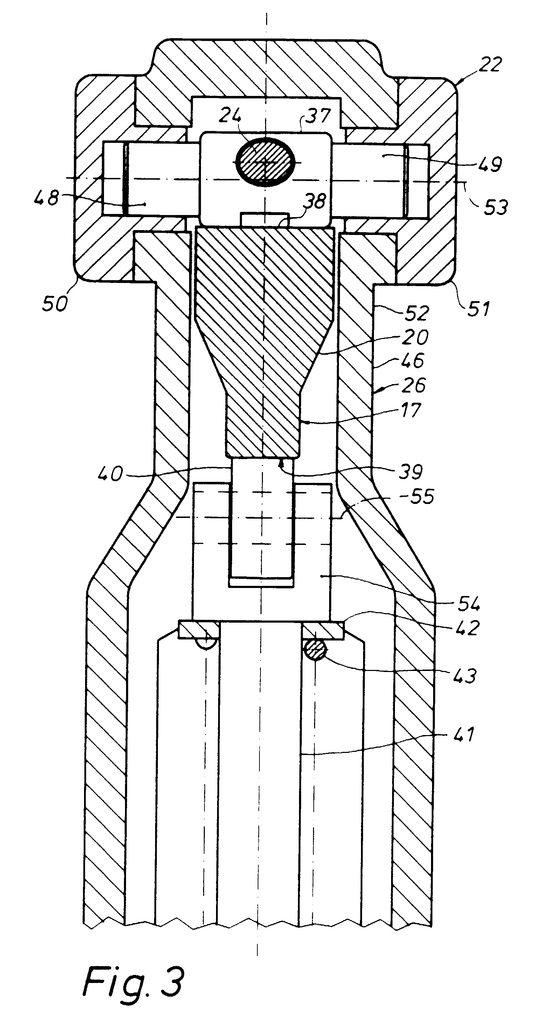

Fig. 3 zeigt weitere Details der Anordnung gemäß Fig. 2 in vergrößerter Darstellung und in leicht abgewandelter Form. Gleiche Teile sind mit gleichen Bezugszahlen versehen.

Das Gleitelement 37 ist mit seitlichen Lagerzapfen 48 und 49 in Einsätzen 50 und 51 eines den Kipphebel 17 übergreifenden Gehäuses 52 um eine waagerechte Achse 53 heb- und senkbar gelagert.

Das als Rolle ausgebildete Drückelement 40 ist in einer oberen Gabel 54 des Schaftes 41 um eine waagerechte Achse 55 drehbar gelagert.

## Patentansprüche

1. Vorrichtung zum motorgetriebenen Anheben wenigstens eines in einem Speiserkopf eines Speisers für eine Glasformmaschine auf und ab bewegbaren Plungers (2),
mit einem an einer vorrichtungsfesten, waagerechten Lagerachse (16) heb- und senkbar gelagerten Kipphebel (17), an dessen einem Arm (18) ein heb- und senkbarer Plungerhalter (3) angelenkt (19) ist, und mit dessen anderem Arm (20) ein Anschlußglied (22) eines Antriebssystems (23) zusammenwirkt,
wobei das Anschlußglied (22) zur Änderung des Plungerhubes längs des anderen Armes (20) einstellbar ist,
und wobei das Antriebssystem (23) einen durch eine elektronische Steuerung steuerbaren, mit dem Anschlußglied (22) verbundenen, elektrischen Servoantrieb (9) mit einer Abtriebswelle (13) aufweist,
dadurch gekennzeichnet, daß das Anschlußglied (22) an einer Zugstange (26) angeordnet ist,
daß die Zugstange (26) an einem freien Ende eines vorrichtungsfest an einem Lagerpunkt (29) gelagerten Schwinghebels (27) in einem Anlenkpunkt (28) angelenkt ist,
daß zwischen dem Lagerpunkt (29) und dem Anlenkpunkt (28) ein erstes Ende (31) einer Schubstange (32) angelenkt (30) ist,
und daß ein zweites Ende (33) der Schubstange (32) an einer an der Abtriebswelle (13) des vorrichtungsfesten Servoantriebs (9) befestigten Kurbel (14) angelenkt ist.

2. Vorrichtung nach Anspruch 1, dadurch gekennzeichnet, daß der Servoantrieb (9) einen elektrischen Servomotor (10) mit senkrechter Längsachse (11) und ein nachgeschaltetes Getriebe (12) mit waagerechter Abtriebswelle (13) aufweist.

3. Vorrichtung nach Anspruch 1 oder 2, dadurch gekennzeichnet, daß die Kurbel (14) stets in derselben Drehrichtung (15) drehbar ist.

4. Vorrichtung nach einem der Ansprüche 1 bis 3, dadurch gekennzeichnet, daß die Kurbel (14) in ihrem unteren Totpunkt in jedem Betriebszyklus für eine Verweildauer zur Synchronisation des Speiserbetriebs anhaltbar ist.

5. Vorrichtung nach einem der Ansprüche 1 bis 4, dadurch gekennzeichnet, daß die Lagerachse (16) des Kipphebels (17) an einem vorrichtungsfesten Gehäuse (8) des Servoantriebs (9) angeordnet ist.

6. Vorrichtung nach einem der Ansprüche 1 bis 5, dadurch gekennzeichnet, daß das Anschlußglied (22) ein auf wenigstens einer nach oben weisenden Gleitbahn (38) des Kipphebels (17) einstellbar verschiebbares Gleitelement (37) aufweist.

7. Vorrichtung nach Anspruch 6, dadurch gekennzeichnet, daß das Gleitelement (37) an einem den Kipphebel (17) übergreifenden Gehäuse (52) des Anschlußgliedes (22) heb- und senkbar gelagert ist.

8. Vorrichtung nach einem der Ansprüche 1 bis 7, dadurch gekennzeichnet, daß der Kipphebel (17) an seiner der wenigstens einen Gleitbahn (38) gegenüberliegenden Seite mit wenigstens einer Hilfsbahn (39) versehen ist, und daß an die wenigstens eine Hilfsbahn (39) ein relativ zu dem Rest der Zugstange (26) bewegbares Drückelement (40) der Zugstange (26) angedrückt ist.

9. Vorrichtung nach Anspruch 8, dadurch gekennzeichnet, daß das Drückelement (40) durch eine mit dem Rest der Zugstange (26) verbundene Feder (43) an die wenigstens eine Hilfsbahn (39) angedrückt ist.

10. Vorrichtung nach einem der Ansprüche 1 bis 9, dadurch gekennzeichnet, daß die wirksame Länge der Zugstange (26) einstellbar (47) ist.

## Claims

1. Apparatus for the motorised lifting of at least one plunger (2) which is movable into and out of a feeder head of a feeder for a glass forming machine,
comprising a tilt lever (17) mounted for rising and falling movement on a horizontal bearing shaft (16) which is fixed relative to the apparatus, one arm (18) of the tilt lever being coupled to a plunger holder (3) which can be raised and lowered, and the other arm (20) of the tilt lever cooperating with a link member (22) of a drive system (23),
wherein the link member (22) is adjustable along the said other arm (20) in order to change the stroke of the plunger,
and wherein the drive system (23) comprises an electric servodrive (9) having a take-off shaft (13), the servodrive being connected to the link member (22) and being controllable by electronic control means,
characterised in that the link member (22) is arranged on a tie rod (26),
the tie rod (26) is coupled at a coupling point (28) to one free end of a pivot lever (27) which is mounted at a bearing point (29) fixed in relation to the apparatus,
in between the bearing point (29) and the coupling point (28) is coupled a first end (31) of a push rod (32),
and a second end (33) of the push rod (32) is coupled to a crank (14) which is fixed to the take-off shaft (13) of the servodrive (9) which is fixed in relation to the apparatus.

2. Apparatus according to claim 1, characterised in that the servodrive (9) comprises an electric servomotor (10) with vertical longitudinal shaft (11) and a subsequent gear transmission (12) with horizontal take-off shaft (13).

3. Apparatus according to claim 1 or 2, characterised in that the crank (14) is rotatable always in the same direction of rotation (15).

4. Apparatus according to one of claims 1 to 3, characterised in that the crank (14) can be held at its bottom dead point in each operational cycle for a dwell period for synchronisation with the feeder operation.

5. Apparatus according to one of claims 1 to 4, characterised in that the bearing shaft (16) of the tilt lever (17) is arranged on a housing (8) of the servodrive (9) which is fixed in relation to the apparatus.

6. Apparatus according to one of claims 1 to 5, characterised in that the link member (22) comprises a sliding element (37) which is adjustably displaceable on at least one upward facing sliding track (38) of the tilt lever (17).

7. Apparatus according to claim 6, characterised in that the sliding element (37) is mounted for rising and falling movement in a housing (52) of the link member (22) which encompasses the tilt lever (17).

8. Apparatus according to one of claims 1 to 7, characterised in that the tilt lever (17) is provided at its side which lies opposite to said at least one sliding track (38) with at least one auxiliary track (39), and that a pressure member (40) of the tie rod (26) which is movable relative to the rest of the tie rod (26) is pressed against said at least one auxiliary track (39).

9. Apparatus according to claim 8, characterised in that the pressure member (40) is pressed against said at least one auxiliary track (39) by means of a spring (43) which is connected to the rest of the tie rod (26).

10. Apparatus according to one of claims 1 to 9, characterised in that the effective length of the tie rod (26) is adjustable (47).

## Revendications

1. Dispositif pour l'élévation entraînée au moteur d'au moins un plongeur (2) pouvant être entraîné en montée et descente dans une tête de distributeur d'un distributeur pour une machine à mouler le verre,
comprenant un culbuteur (17) monté, mobile en mouvement ascendant et descendant, sur un axe de portée horizontal (16) solidaire du dispositif, à l'un (18) des bras duquel est articulé (en 19) un support de plongeur (3) mobile en mouvement montant et descendant et avec l'autre bras (20) duquel coopère un organe de liaison (22) d'un système d'entraînement (23),
l'organe de liaison (22) pouvant être réglé en position sur la longueur de l'autre bras (20) pour faire varier la course du plongeur,
et dans lequel le système d'entraînement (23) présente une servocommande électrique (9) munie d'un arbre de sortie (13), qui peut être commandé par une commande électronique, et qui est relié à l'organe de liaison (22),
caractérisé en ce que l'organe de liaison (22) est monté sur une bielle (26),
en ce que la bielle (26) est articulée, en un point d'articulation (28), à une extrémité libre d'un levier oscillant (27) articulé sur un point de portée (29) solidaire du dispositif.
en ce qu'une première extrémité (31) d'une bielle (32) est articulée (en 30) entre le point de portée (29) et le point d'articulation (28),
et en ce qu'une deuxième extrémité (33) de la bielle (32) est articulée sur une manivelle (14) fixée à l'arbre de sortie (13) de la servocommande (9) solidaire du dispositif.

2. Dispositif selon la revendication 1, caractérisé en ce que la servocommande (9) comprend un servomoteur électrique (10) à axe longitudinal vertical (11) et un renvoi aval (12) possédant un arbre de sortie horizontal (13).

3. Dispositif selon la revendication 1 ou 2, caractérisé en ce que la manivelle (14) peut tourner toujours dans le même sens de rotation (15).

4. Dispositif selon une des revendications 1 à 3, caractérisé en ce que, dans chaque cycle de travail, la manivelle (14) peut être immobilisée à son point mort bas, pendant une durée de séjour, pour la synchronisation du travail du distributeur.

5. Dispositif selon une des revendications 1 à 4, caractérisé en ce que l'axe de portée (16) du culbuteur (17) est agencé sur un boîtier (8) de la servocommande (9) qui est solidaire du dispositif.

6. Dispositif selon une des revendications 1 à 5, caractérisé en ce que l'organe de liaison (22) présente un curseur (37) qui peut se déplacer de façon réglable sur au moins une glissière (38) du culbuteur (17) qui est dirigée vers le haut.

7. Dispositif selon la revendication 6, caractérisé en ce que le curseur (37) est monté mobile en mouvement ascendant et descendant le long d'un boîtier (52) de l'organe de liaison (22) qui surmonte le culbuteur (17).

8. Dispositif selon une des revendications 1 à 7, caractérisé en ce que le culbuteur (17) est muni d'au moins une piste auxiliaire (39) sur son côté qui est à l'opposé de l'au moins une glissière (38) et en ce qu'un élément de pression (40) de la bielle (26) qui peut se déplacer relativement au reste de la bielle (26) est pressé contre l'au moins une piste auxiliaire (39).

9. Dispositif selon la revendication 8, caractérisé en ce que l'élément de pression (40) est pressé contre l'au moins une piste auxiliaire (39) par un ressort (43) relié au reste de la bielle (26).

10. Dispositif selon une des revendications 1 à 9, caractérisé en ce que la longueur effective de la bielle (26) est réglable (en 47).
